# EUROPEAN PATENT SPECIFICATION

(11) **EP 4 604 485 B1**
(45) Date of publication and mention of the grant of the patent: **08.07.2026**
(21) Application number: 24305269.3
(22) Date of filing: 16.02.2024
(51) Int. Cl.: H04L 47/21, H04W 72/54, H04W 28/02, H04L 41/0894, H04W 28/24

(54) **METHOD FOR OBTAINING DATA REPRESENTING NETWORK CAPACITIES IN A 5G SNPN FOR QOS PROFILE ADAPTATION, DEVICE, SYSTEM, AND CORRESPONDING COMPUTER PROGRAMS**
VERFAHREN ZUM ERHALT VON DATEN ZUR DARSTELLUNG VON NETZWERKKAPAZITÄTEN IN EINEM 5G-SNPN ZUR ANPASSUNG EINES QOS-PROFILS, VORRICHTUNG, SYSTEM UND ENTSPRECHENDE COMPUTERPROGRAMME
PROCÉDÉ D'OBTENTION DE DONNÉES REPRÉSENTANT DES CAPACITÉS DE RÉSEAU DANS UN SNPN 5G POUR L'ADAPTATION DE PROFIL QOS, DISPOSITIF, SYSTÈME ET PROGRAMMES D'ORDINATEUR CORRESPONDANTS

(43) Date of publication of application: 20.08.2025
(73) Proprietor: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: KHANFOUCI, Mourad, 35708 RENNES CEDEX 7 (FR); GRESSET, Nicolas, 35708 RENNES CEDEX 7 (FR)
(74) Representative: Plasseraud IP

(56) References cited:
- CN-A- 114 143 272
- US-B2- 10 805 205
- GORLATCH SERGEI ET AL: "Enabling high-level QoS metrics for interactive online applications using SDN", 2015 INTERNATIONAL CONFERENCE ON COMPUTING, NETWORKING AND COMMUNICATIONS (ICNC), IEEE, 16 February 2015 (2015-02-16), pages 707 - 711, XP032752605, [retrieved on 20150326], DOI: 10.1109/ICCNC.2015.7069432

## Description

### TECHNICAL FIELD

The disclosure relates to the management of applications deployed within communications networks. More specifically, the invention relates to the allocation, within a communications network, of resources required to implement an application. The invention finds an application, for example, in the implementation of applications within a non-public communications network.

### BACKGROUND ART

5G networks constitute a major part of deployment of nowadays wireless networks. They offer higher speeds, lower latency, and increased capacity compared to their predecessors. These networks are designed to divide the service area into small geographical areas called cells, with each cell having a base station and antennas to connect all 5G wireless devices via radio waves. The networks are supposed to provide faster downloads, smoother streaming, and more responsive online experiences, even in areas with high network traffic. Additionally, 5G technology is deemed to offer low latency rates, reducing the delay between sending and receiving information. In addition, 5G networks support a wide range of communication needs, from low-power Local Area Networks (LAN) to Wide Area Networks (WAN), with the ability to tailor network configurations to align with specific application needs. Furthermore, 5G technology enables the deployment of multiple independent virtual networks over the same infrastructure, allowing for customization of each network slice for different services and business cases.

In this context, the demand for tailored QoS profiles to support diverse applications is increasing, particularly in standalone private network deployments (SNPN). An SNPN is an example of a private 5G network that has been deployed separately from the public 5G network. This means that the private 5G network is standalone, with no dependencies on the public 5G network. It is completely isolated from public networks, and the g-NB, 5G CN control plane, and user plane are implemented within the premises of the enterprise or company to which the SNPN belongs. SNPN are more and more use in contexts of automation and connected factories and industries to offer a factory network which allows teleoperation for example.

Basically, a SNPN comprises a 5G core network (5GCN) comprising various nodes, which are able to connect each other. These nodes are used to transfer information from an emitter to a receiver. The emitter may for example be a server and the receiver may for example be a client. These roles are exchangeable as a function of the context. The server may run a Server Application while the client may run a Client Application. In a communication session, the Server Application may need to transmit data to the Client Application, using the 5GCN and its nodes.

More specifically, an application integration to SNPN is based on northbound application program interfaces (APIs). The Northbound API refers to an interface that allows higher-level network components, such as applications or orchestration services, to communicate with the SDN (Software Defined Network) controller at the middle control layer. It facilitates the transmission of commands and requests from the application layer to the SDN controller, enabling the implementation of network-wide policies and configurations. The northbound API is used to collect quality of service requirements requested by the Application and translate these requirements into network quality of service (QoS) profiles.

The network QoS profiles are then applied by the network controller on the routers of the network in order to implement the QoS policy. This deployment of the network QoS policy is based on the southbound API. The application of the QoS policy is performed by the means of updating packet marking rules through QFI inclusion and QFI specific routing rules that are applied in each router (node) of the network. It is recalled, for completeness purpose, that the QoS flow binding is the association of a PCC (Policy and Charging Control) rule to a QoS flow, identified by the QFI, within a PDU session. In short, the northbound and southbound interfaces are responsible of translation of the application QoS to network QoS and setting network QoS policy over the data path. Document CN114143272 discloses Southbound interface and Northbound interface for QoS translation from the application side to the network side.

The problem of the integration of the application to NPN is basically the problem of how to serve at best the Application needs by finding the QoS marking and routing rules without multiple negotiations with the application layer. However, existing methods for obtaining network capacity data and building QoS profiles are often limited in their adaptability to applications needs within a SNPN.

Indeed, the problem of the state of the art of application integration to SNPN is that integration process is based on requests, originating from the application layer, these requests being unaware of the network status and capacities. In response to these requests, the network may either apply the best possible network QoS that approximate the Application QoS requests or evaluate multiple achievable network QoS profiles. The Application can then react to the network QoS information obtained from the SNPN controller by selecting additional parameters at the application layer in order to adapt to the provided network status in order for ensuring the application integration. In summary, for integrating an Application, the application layer control plane, i.e. application function (AF), should be aware of detailed/complex network information and possibly should try multiple QoS requests until finding the best session parameters that optimize the application layer performance.

This method makes the overall application integration long and complex and very much tied to the network information exposed by the private network. If the application is not knowing the deployment or is of low complexity, this may add delays for its integration of the application or bad performance in the operation mode, which results in bad experience and unreached expectations.

### SUMMARY

The present disclosure aims to improve the situation. It is thus disclosed a method and system for efficiently obtaining data representing network capacities within a SNPN. The method involves collecting network capacity data, analysing the data, and building QoS profiles adapted to specific applications based on the analysed network capacities and application profiles preferences. In consequence, the disclosure relates to a method for configuring an application to integrate in a wireless communication system, the application comprising an application server and an application client, the method being implemented by a system interface comprising an application function interface and a network controller device of the wireless communication system. The invention is defined in the appended claims. According to the disclosure, the method comprises at least one iteration of the following steps:
- obtaining for the wireless communication system at least one piece of data representing a value of a capacity parameter of the wireless communication system in the form of a set of network capacities,
- with the set of network capacities, requesting the application function interface to provide at least one response representing the capability, for the application to operate with at least one proposed subset of parameter values extracted from the set of network capacities, and storing the at least one response in a response data structure,
- integrating the application in the wireless communication network by allocating, to the application server, a QoS profile, the QoS profile being determined by the network controller device as a function of current network capacities and the responses stored in the response data structure.

Thus, the disclosure allows adapting the configuration of the QoS profiles, and corresponding communication session, as a function of some return of the application with respect to the actual possibility offered by the network capacities within a SNPN.

According to a feature, integrating the application in the wireless communication network comprise the network controller device using the QoS profile to setup the session for the application.

Hence, the QoS profile is directly fed to the network controller device for achieving a normal operation of the application.

According to a feature, the wireless communication system comprises a 5G standalone private network.

Hence, the QoS profile can be managed more efficiently.

According to a feature, obtaining the set of network capacities comprises querying a digital twin of said wireless communication system.

In consequence, it is possible to simulate various situations that may occur in the wireless communication system and obtain possible QoS profiles that could potentially be used to setup some communication session in a more effective way.

According to a feature, obtaining the set of network capacities comprises:
- transmitting to a component of said network, at least one request for obtaining at least one piece of data representing a value of a capacity parameter of the component,
- inserting the at least one piece of data representing the value of the capacity parameter of the component in a data structure storing the set of network capacities.

Thus, an automated process may be used to facilitate the gathering of network capacities across various situations, the data structure being used to accumulated and process these network capacities.

According to a feature, requesting the application function interface comprises at least one iteration of the following steps:
- Selecting, among a set of network capacities, at least one proposed subset of parameter values extracted from the set of network capacities,
- Transmitting the at least one proposed subset of parameter values to the application function interface,
- Receiving, from the application function interface, at least one indicator representing the capability for the application, to be implemented with said at least one proposed subset of parameter values,
- Storing the at least one indicator with the at least one proposed subset of parameter values.

The selection is made with the use of the (pivoting) data structure, and the interface of the application function receives the subset of parameters and process them so as to indicate whether the use of these parameters suits to the application.

According to a feature, receiving the at least one indicator representing the capability for the application, to be implemented with said at least one proposed subset of parameter values, comprises the application function interface querying a digital twin of the application deployment.

Hence, a simulation of what ability for the application to process is done "offline", which allows testing these proposed subset of parameters in a more efficient way.

According to a feature, the digital twin of the application deployment comprises at least one application flow model in a digital twin of the wireless communication system.

It is thus easier to determine an operative execution environment for the application by measuring the efficiency of data transmission in the simulated wireless communication system.

According to a feature, the digital twin of the application deployment comprises at least one application flow model in the wireless communication system.

It is thus possible to directly determine an operative execution environment for the application by measuring the efficiency of data transmission in the real wireless communication system.

According to a feature, the at least one response representing the capability, for the application to operate with at least one proposed subset of parameter values extracted from the set of network capacities, comprises responses provided by the application server and/or responses provided by the application client.

According to a feature, the at least one response representing the capability, for the application to operate with the at least one proposed subset of parameter values comprises a label representing a behaviour of the application.

According to a feature, the label representing a behaviour of the application represents a troubleshoot of the end-to-end transmission of at least one packet between the application client and the application server.

According to a feature, integrating the application in the wireless communication system comprises:
- Obtaining, from the in the wireless communication system, current network capacities,
- Selecting, from the response data structure and as a function of current network capacities, at least one session QoS profile affected to at least one dataflow of the application in the wireless communication system,
- Transmitting, to at least the wireless communication system, the at least one session QoS profile affected to the at least one dataflow of the application.
- Opening for the application, in the wireless communication system, a communication session with the obtained QoS profile.

According to another aspect, the disclosure also relates to a device for configuring an application to integrate in a wireless communication system, the application comprising an application server and application client, the device being part of a network controller device of the wireless communication system, comprising the application function interface. According to the disclosure, the device comprises:
- a gathering module for obtaining for the wireless communication system, at least one piece of data representing a value of a capacity parameter of the wireless communication system in the form of a set of network capacities,
- a requesting module configured for, with the set of network capacities, requesting the application function interface to provide at least one response representing the capability, for the application to operate with at least one proposed subset of parameter values extracted from the set of network capacities, the responses of the application being stored in a response data structure,
- an integrating module configured for integrating the application in the wireless communication system by allocating, to the application server, a QoS profile, the QoS profile being determined as a function of the set of network capacities and the response stored in the response data structure.

According to another general aspect of at least one embodiment, there is provided a non-transitory computer readable medium containing data content generated according to any of the described method for configuring application according to at least one QoS profile.

According to another general aspect of at least one embodiment, there is provided a signal comprising data representative of at least one tensor of at least one layer or sub-layer of at least one QoS profile, generated according to any of the described method for configuring application.

According to another general aspect of at least one embodiment, there is provided a computer program product comprising instructions which, when the program is executed by a computer, cause the computer to carry out any of the described method for configuring application.

According to another general aspect of at least one embodiment, there is provided a non-transitory program storage device, readable by a computer, tangibly embodying a program of instructions executable by the computer to perform at least one of the methods of the present disclosure in any of its embodiments.

According to another general aspect of at least one embodiment, there is provided a computer readable storage medium comprising instructions which when executed by a computer cause the computer to carry out at least one of the methods of the present disclosure in any of its embodiments.

While not explicitly described, the devices of the present disclosure can be adapted to perform the methods of the present disclosure in any of their embodiments.

While not explicitly described, the present embodiments related to the methods or to the corresponding signal, devices, and computer readable storage media can be employed in any combination or sub-combination.

### BRIEF DESCRIPTION OF DRAWINGS

The disclosure will be better understood upon reading the following description, given as an example that is in no way limiting, and made in reference to the figures which show:
- Figure 1: illustrates a communication system according to the disclosure,
- Figure 2: illustrates the main steps of the disclosed method,
- Figure 3: illustrates the steps of the challenging phase,
- Figure 4: illustrates an example of device designed to produce the QoS profiles according to the method of the disclosure.

In these figures, references identical from one figure to another designate identical or analogous elements. For reasons of clarity, the elements shown are not to scale, unless explicitly stated otherwise. Also, unless required by the language of the description, the order of steps represented in these figures is provided only for illustration purposes and is not meant to limit the present disclosure which may be applied with the same steps executed in a different order.

### DESCRIPTION OF EMBODIMENTS

The disclosure provides a novel approach to obtain and utilize network capacity data to dynamically build QoS profiles tailored to the requirements of specific applications.

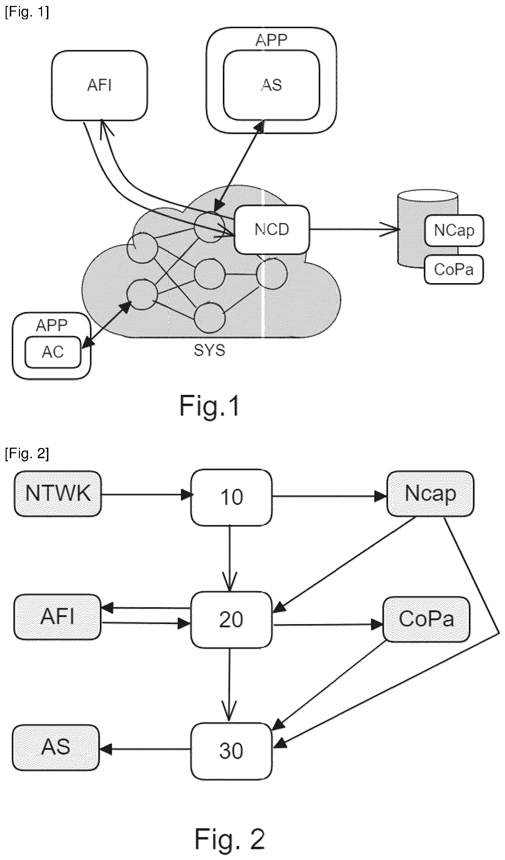

Figure 1 illustrates a communication system in which the method of the disclosure is implemented. The wireless communication system (SYS) comprises an application (App) comprising an application server (AS) and application client (AC), the method being implemented by a system interface (SI) comprising an application function interface (AFI) and a network controller device (NCD) of the wireless communication system (SYS). The network controller device (NCD) has the ability to access a database comprising records for storing and processing network capacities (NCap) and some responses (in a response data structure CoPa).

Figure 2 illustrates the steps of the disclosed method. It is thus proposed a method for configuring an application (App) to integrate in the system (SYS). The method comprises at least one iteration of the following steps:
- obtaining (10) for the wireless communication system (SYS) at least one piece of data representing a value of a capacity parameter of the wireless communication system (SYS) in the form of a set of network capacities (NCap),
- with the set of network capacities (Ncap), requesting (20) the application function interface (AFI) to provide at least one response representing the capability, for the application (App) to operate with at least one proposed subset of parameter values extracted from the set of network capacities (Ncap), and storing the at least one response in a response data structure (CoPa),
- integrating (30) the application (App) in the wireless communication network (SYS) by allocating, to the application server (AS), a QoS profile (QoSp), the QoS profile (QoSp) being determined by the network controller device (NCD) as a function of current network capacities (Ncap) and the responses stored in the response data structure (CoPa).

In other words, in an example embodiment, the method globally involves the steps of:
- Collecting a set of network capacities from a southbound API (possibly through a proprietary interface (IF)), the collected set of network capacities being stored in a collection data structure,
- With the set of network capacities, challenging an Application to integrate in the network, in order to learn the best application layer QoS with respect the network capacities, these challenges being performed preferably in an offline operation mode (with a model-based 5G system twin), the learned QoS parameters being stored as QoS profiles in a data structure, and
- In an integration phase, selecting, among the stored QoS profiles, a specific QoS profile to be assigned to dataflows of the Application. For sake of clarity, the integration of an application should be understood as the allocation, to the application, a QoS profile, the QoS profile being determined as a function of the set of network capacities and the response stored of the Application to the challenges for which the Application provided some responses.

The method is implemented by a specific API. This API is designed (e.g., along with the 5G CN) for simplifying the session management from the application point of view, and to adapt to the specific deployment of the core network (that may vary substantially from one site and customer to another). In a specific embodiment, this API can rely on Al techniques based on application data collected via the API and network data available in the CN. Hence, the solution to the problem of (long, complex and network status/information tied, resource consumption) integration of applications in a network, is to propose techniques for obtaining the best application session QoS parameters (e.g, by applying machine learning and AI). The specific northbound API design that is proposed is based on feature identification and classification and exposing the capacities the application function.

In other words, according to the disclosure, it is proposed to reverse the existing paradigm relating to the selection of suitable QoS parameters provided to an Application in a network, and more specifically in a 5G network. Rather than letting the application repeatedly query the northbound API, the proposed method allows the southbound API to proactively collect the various network capacities (i.e. minimum latency times, average jitters, processing capacities (power of the network's computing units), quantities of memory available on the nodes, etc).

This information obtained proactively (and, e.g., in advance, while for example building a digital twin of the network) enables the core network (or a particular module of the core network) to challenge the application, for example in an "offline" mode, i.e. by simulating proposals to the application to be integrated and to obtain the application's level of satisfaction. When the application responds positively to some of the configurations (i.e. set of parameters representative of QoS), this satisfaction data is corelated to the proposed configurations (i.e. subset of capacities, in a range of possible combinations of capacities). One can thus, for example, simulate the system (using the digital twin of the system and deduce Ncap from the simulation), and/or simulate the system and the application and deduce NCAP from the digital twin of the system and the application. This digital twin can consist of simulating several possible configurations for the system and the application integration and deducing NCap from them.

Finally, in an "integration" phase, the module proposes parameters to the application when it is integrated, i.e. when it is put online in the network, in the form of an adapted QoS profile. These parameters are those that are likely to be best suited to the application, given its type, for example, and given the training that has already been carried out in the simulation phase.

### Description of the collection phase

As already mentioned herein before, the capacities collection phase aims at obtaining, from the network, the data which enables building an overall view of the capacities of the network. This collection phase is implemented via the southbound API. The southbound API is located at the interface between the network controller, which resides at the middle control layer, and the lower networking elements at the data layer, which consist of the physical or virtual network switches and ports. According to the disclosure, the southbound API is configured for transmitting capacities requests to the nodes of the networks. The configuration of the southbound API for achieving such result is preferentially done in a specific interface, which can be proprietary.

In this phase, the network controller system obtains e.g., topological information, hardware resources, route tables, cost metrics between links, bandwidth measurements, and specific parameters of the network elements. This is achieved using agents and/or the southbound API in the physical network, which collect information using protocols and tools such as ALTO, SNMP, and Iperf3. The collected information is sent to a device of the network controller system responsible for completing a data model representing the network's characteristics. It is assumed that the network is stabilized at the start of the collection phase, and a finite period is specified to obtain the data. This phase can for example being implemented concomitantly to the construction of the digital twin of the communication network.

The collection phase comprises iterations of data collection. Collected Data represents the capacities of the network and can be of several abstraction levels, from basic physical capacity data to higher abstracted capacities data, the higher being for example constructed on the basis of the lower ones. The collected capacities can be theorical ones (meaning based on the ranges of values that can be affected to some parameters, for example, or based one physical characteristics of the nodes), and or current ones (meaning based on the actual situation of the network, for example, available memory, current jitter, current latency or retention time, etc.).

For example, the capacities are virtual resource provided by the SNPN, considered as a cloud. These resources could be computing resources (CPU), storage resources (memory) and networking resources (virtual private networks) that could be used to support the integration of the application with SNPN:
- The virtual resources are for example the best virtual resources offered by the SNPN cloud
- The virtual resources are for example the best expected virtual resource offered by the SNPN cloud.

As another example, the capacities are a function of the physical resources available in the base stations that are part of the data path of the application packets:
- The capacities are for example related to the load at the base stations of the SNPN and can change with each base station,
- The capacities are for example related to the available bandwidth at the base station and is changing with each base station.

As another example, the capacities are a function of the quality offered by the SNPN to the application. The quality is for example calculated by the means of a function of at least, end-to-end latency, end-to-end throughput or end-to-end application packet error rate or any other quality metric that is related to the quality of the transmission of application packets in the data path in SNPN:
- The capacities are for example obtained by the means of digital twin of the NPN, where multiple data paths for the application is evaluated and the capacities are stored for the deployment of single application,
- The capacities are for example obtained by the means of digital twin of the NPN, where multiple data paths for the application is evaluated and the capacities are stored for the deployment of multiple applications. Two applications are for example considered for this option, i.e. the deployment of high resource demanding application and the deployment of low resource demanding application.

In an embodiment, the capacities of the nodes of the network are received under the form of a record. In a record, several fields are populated. For example, a record can comprise a router identifier, a maximum bandwidth value, a current bandwidth value, a jitter, an IP address, a MAC address, etc. According to an embodiment, the capacities are stored in an appropriate data structure, which for example can be a relational database allowing mapping relationships between the network components.

### Description of the challenge phase

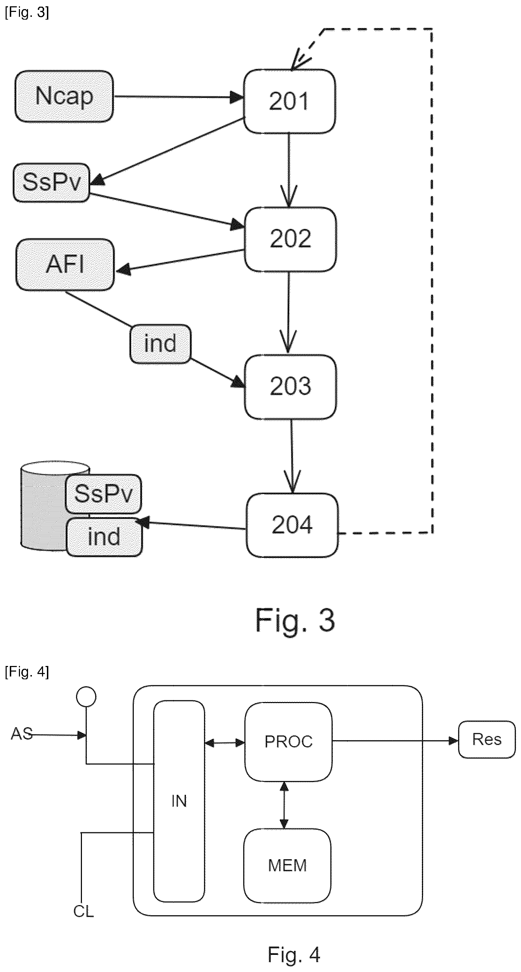

In this section, the way the Application is challenged is described. By challenging the Application, the disclosure means requesting the application to provide data representing the capability, for the application to operate with parameter values extracted from the set of network capacities. The objectives of these challenges are to the application satisfaction with respect the network capacities. The challenge phase, as exposed herein after with figure 3, may be conducted offline. The challenging phase comprises at least one iteration of the following steps:
- Selecting (201), among the set of network capacities (NCap), a subset of network capacities (SsPv),
- Transmitting (202), to the Application (To the AFI), the subset of network capacities (SsPv), in the form of at least one set of parameter values,
- Receiving (203), from the Application (from the AFI), a response (comprising an indicator ind) representing the capability, for the Application, to operate (i.e. to normally process its functions) with said subset of network capacities (SsPv) (the indicator may be a Boolean one, or a more expressive one, for example explicating convenient and inconvenient parameters, in the form of Booleans, or some real values regarding data transmission, for example),
- Storing (204), in the response data structure (CoPa), the received response (Ind) of the Application along with the selected subset of capacities (SsPv).

Thanks to this process, one allows matching a huge amount of network capacities with an Application which in turns opens the ability of quickly fine tuning the integration of the Application in the network. Obviously, such an integration technique is not practicable by a human, since it is not humanly feasible to process, quickly and efficiently, the several thousands of parameters values that are transmitted by the apparatuses which compose the system. The disclosed method has proven to be efficient and reliable to many network configurations and had allowed integrating various Application types in an efficient manner.

According to an embodiment, the challenging phase is realized in a virtualized environment. More specifically, the challenging phase is realized in a digital twin of the network, just like the collection phase. The Digital twin is thus able to process the iterations of the challenging phase while storing the results in the appropriate response data structure. In addition, the challenging phase may be processed offline, thanks to a digital twin of the Application. In this situation, the challenging phase is done on an offline version of the Application. This challenging phase may thus be processed in advance, while planning to integrate the application.

In a specific embodiment, the dedicated interface of the network controller system is used to challenge the (offline) application. For example:
a. the dedicated interface requests the application to evaluate its satisfaction (i.e., to provide a result regarding the capability to execute, i.e., to normally operate) with respect to some querying capacities. In this case, the application can receive the network subset of capacities and assess its satisfaction:
   - the application responds with an instantaneous application satisfaction indicator (which is either a binary indicator, or a range indicator, comprised between 0 and 1),
   - the application responds with an instantaneous application satisfaction indicator along with additional information corresponding to the expected variation of the satisfaction with respect to the received capacities (which means that the Application can express an update of one or several parameter values among the one received from the interface), and/or (as a function of the mebodiments)
b. The dedicated interface embeds a digital twin of the application that simulates offline the satisfaction of the application with respect to the proposed capacities. For example, a simplified interface allows the application notifying when the end-to-end packet transmission between two instances of the application (e.g., server and client) produces trouble in the application behaviour.

According to a particular implementation, the challenge phase is implemented using a typology of applications. More specifically, to prepare for the integration of the application as well as possible, instead of using the application itself in offline mode, the challenge phase is implemented using applications of the same type (i.e. of the same category). In other words, the challenge phase, conducted off-line, is carried out on several different types of application (for example, streaming application type, real-time manufacturing control application type, machine tool operating parameter update application type, etc.). Each type of application is challenged separately, and parameter values are proposed for each of these types of application, as exposed herein before. At the end of the challenge phase, one therefore obtains several groups of sub-sets of parameter values, taken from the network capacities, each of these groups corresponding to a given type of application. As will be explained later, these groups of parameters are then used to integrate (i.e. assign a particular QoS) to a specific application to be integrated.

### Description of the integration phase

The purpose of this integration phase is to determine, at a given time, which are the best parameters values that can be attributed to an application to be integrated (which may be the application that has been challenged offline, or a new application, but whose type is known and for which this type has been challenged offline). The parameter values to be assigned to the application to be integrated are therefore a function of both the current (i.e. real-time) capacities of the communication network and the satisfaction indicators obtained during the challenge phase. A custom QoS profile may thus be constructed and assigned (and propagated) into the communication network. Hence, for example:
- Based on the SNPN capacities and application satisfaction indicators, classification is performed to determine classes of behaviour, i.e. capacities vs satisfaction, that describe the current possible session QoS profile that may be provided by the SNPN. Then, an additional information about the application nature, elastic/non elastic application, helps the interface to select session QoS profiles and transmit it to the application:
   - number and classes of behaviour are provided by the application server, and/or by the application control function,
   - number and classes of behaviour are learned along with the classification and hierarchical clustering/Deep clustering classification techniques,
- Based on the SNPN capacities and application satisfaction indicators, classification is performed to determine classes of behaviour, i.e. capacities vs satisfaction, that describe the predicted session QoS profile that may provide by the SNPN. Then, an additional information about the application nature, elastic/non elastic application, helps the interface to select session QoS profiles and transmit it to the application:
   - number and classes of behaviour are provided by the application server, and/or by the application control function,
   - number and classes of behaviour are learned along with the classification and hierarchical clustering/Deep clustering classification techniques,

Hence, one can for example define three classes of application behaviour:
- "Gold class": low latency, good throughput,
- "Silver class": average latency, good throughput,
- "Copper class": average latency, average throughput.

This information, three classes, with class proprietary can be given by the (AS)+(AC) application or taken by the proposed clustering techniques.

### Description of a device for configuring an application

As shown in figure 4, the device DV for configuring an application in a wireless communication network, as presented above, can comprises an antenna system AS, for example coupled through an interface IN to a processing circuit including a processor PROC and a memory MEM. Alternatively, or in complement, or as a variant, of the antenna system AS, necessary data (capacities of the network and of the devices composing the network) can also be received through a communication link CL allowing the device to set up the necessarily parameters RES dedicated to the application to integrate, according to the disclosure. The memory stores at least instructions of a computer program according to the present disclosure. By carrying out this type of processing, and in particular by implementing the configuration method according to the method of the disclosure, the device's processor has proven to be able to search for thousands of possibilities and combinations in the various possible network parameters values, in a short period of time. Such an effect is obviously not possible by attempting to calculate or obtain these possible network parameters values manually or mentally, as this would be too time-consuming and completely pointless regarding the complexity of the problem.

In preferred embodiments, the computer system or device comprises one or more processors (which may belong to a same computer or to different computers) and one or more memories (magnetic hard disk, optical disk, electronic memory, or any computer readable storage medium) in which a computer program product is stored, in the form of a set of program-code instructions to be executed in order to implement all or part of the steps of the configuring method. Alternatively, or in combination thereof, the computer system can comprise one or more programmable logic circuits (FPGA, PLD, etc.), and/or one or more specialized integrated circuits (ASIC), etc., adapted for implementing all or part of the steps of the configuring method. In other words, the computer system comprises a set of means configured by software (specific computer program product) and/or by hardware (processor, FPGA, PLD, ASIC, etc.) to implement the steps of the configuring method.

## Claims

1. A method for configuring an application (App) to integrate in a wireless communication system (SYS), the application (App) comprising an application server (AS) and application client (AC), the method being implemented by a system interface (SI) comprising an application function interface (AFI) and a network controller device (NCD) of the wireless communication system (SYS), the method comprising:
- obtaining (10), for the wireless communication system (SYS), at least one piece of data, each piece of data representing a value of a capacity parameter of the wireless communication system (SYS), in the form of a set of network capacities (NCap),
- with the set of network capacities (Ncap), requesting (20) the application function interface (AFI) to provide at least one response representing the capability, for the application (App) to operate with at least one proposed subset of parameter values extracted from the set of network capacities (Ncap), and storing the at least one response in a response data structure (CoPa),
- integrating (30) the application (App) in the wireless communication network (SYS) by allocating, to the application server (AS), a QoS profile (QoSp), the QoS profile (QoSp) being determined by the network controller device (NCD) as a function of current network capacities (Ncap) and the responses stored in the at least one response data structure (CoPa).

2. The method, according to claim 1, wherein integrating (30) the application (App) in the wireless communication network (SYS) comprise the network controller device (NCD) using the QoS profile (QoSp) to setup a session for the application (App).

3. The method, according to claim 1, wherein the wireless communication system (SYS) comprises a 5G standalone private network (SNPN).

4. The method according to claim 1, wherein obtaining (10) the set of network capacities (Ncap) comprises querying a digital twin of said wireless communication system (SYS).

5. The method according to claim 1, wherein obtaining (10) the set of network capacities (Ncap) comprises:
- transmitting to a component of said network, at least one request for obtaining at least one piece of data representing a value of a capacity parameter of the component,
- inserting the at least one piece of data representing the value of the capacity parameter of the component in a data structure storing the set of network capacities (Ncap).

6. The method according to claim 1, wherein requesting (20) the application function interface (AFI) comprises at least one iteration of the following steps:
- Selecting, among the set of network capacities (Ncap), the at least one proposed subset of parameter values extracted from the set of network capacities,
- Transmitting the at least one proposed subset of parameter values to the application function interface (AFI),
- Receiving, from the application function interface (AFI), at least one indicator representing the capability for the application, to be implemented with said at least one proposed subset of parameter values,
- Storing the at least one indicator with the at least one proposed subset of parameter values.

7. The method according to claim 6, wherein receiving the at least one indicator representing the capability for the application (App), to be implemented with said at least one proposed subset of parameter values, comprises the application function interface (AFI) querying a digital twin of a deployment of the application (App).

8. The method according to claim 6, wherein the digital twin of the application deployment comprises at least one application flow model in a digital twin of the wireless communication system (SYS).

9. The method according to claim 6, wherein the digital twin of the application deployment comprises at least one application flow model in the wireless communication system (SYS).

10. The method according to any of the preceding claims, wherein the at least one response representing the capability, for the application (App) to operate with at least one proposed subset of parameter values extracted from the set of network capacities (Ncap), comprises responses provided by the application server (AS) and/or responses provided by the application client (AC).

11. The method according to any of the preceding claims, wherein the at least one response representing the capability, for the application (App) to operate with the at least one proposed subset of parameter values comprises a label representing a behaviour of the application (App).

12. The method according to claim 11, wherein the label representing a behaviour of the application (App) represents a troubleshoot of the end-to-end transmission of at least one packet between the application client (AC) and the application server (AS).

13. The method according to claim 1, wherein integrating (30) the application (App) in the wireless communication system (SYS) comprises:
- Obtaining the current network capacities (CNCap) from the wireless communication system, ,
- Selecting, from the response data structure (CoPa) and as a function of current network capacities (CNCap), at least one session QoS profile affected to at least one dataflow of the application in the wireless communication system (SYS),
- Transmitting, to at least the wireless communication system (SYS), the at least one session QoS profile affected to the at least one dataflow of the application.
- Opening for the application (App), in the wireless communication system, a communication session with the obtained QoS profile.

14. A device for configuring an application (App) to integrate in a wireless communication system (SYS), the application (App) comprising an application server (AS) and application client (AC), the device being part of a network controller device (NCD) of the wireless communication system (SYS) comprising an application function interface (AFI), the device comprising:
- a gathering module for obtaining, for the wireless communication system (SYS), at least one piece of data, each piece of data representing a value of a capacity parameter of the wireless communication system (SYS), in the form of a set of network capacities (Ncap),
- a requesting module configured for, with the set of network capacities (Ncap), requesting the application function interface (AFI) to provide at least one response representing the capability, for the application (App) to operate with at least one proposed subset of parameter values extracted from the set of network capacities (Ncap), the at least one response of the application (App) being stored in a response data structure (CoPa),
- an integrating module configured for integrating (30) the application (App) in the wireless communication system (SYS) by allocating, to the application server (AS), a QoS profile (QoSp), the QoS profile (QoSp) being determined as a function of the set of network capacities (Ncap) and the at least one response stored in the response data structure (CoPa).

15. Computer program product comprising instructions which, when executed by at least one processor, configure said at least one processor to carry out a method (1) according to any one of claims 1 to 13.

## Patentansprüche

1. Verfahren zur Konfiguration einer Applikation (App), welche in ein drahtloses Kommunikationssystem (SYS) integriert werden soll, wobei die Applikation (App) einen Applikationsserver (AS) und einen Applikationsklienten (AC) umfasst, wobei das Verfahren, welche durch eine Systemschnittstelle (SI) implementiert ist, eine Applikationsfunktionsschnittstelle (AFI) und eine Netzwerkkontrollvorrichtung (NCD) des Kommunikationssystems (SYS) umfasst, wobei das Verfahren umfasst:
- Erhalten (10), für das drahtloses Kommunikationssystem (SYS), mindestens eines Datenelements, wobei jedes Datenelement einen Wert eines Kapazitätsparameters des drahtlosen Kommunikationssystems (SYS) repräsentiert, in der Form einer Gruppe von Netzwerkkapazitäten (NCap),
- mit der Gruppe von Netzwerkkapazitäten (Ncap), Anfragen (20) der Applikationsfunktionsschnittstelle (AFI), um mindestens eine Antwort bereitzustellen, welche die Fähigkeit repräsentiert, dass die Applikation (App) mit mindestens einer vorgeschlagenen Untergruppe von Parameterwerten zu arbeiten, welche aus der Gruppe von Netzwerkkapazitäten (Ncap) extrahiert werden, und Speichern der mindestens einen Antwort in einer Antwortdatenstruktur (CoPa)
- Integrieren (30) der Applikation (App) in das drahtlose Kommunikationsnetzwerk (SYS) durch Zuweisung, an den Applikationsserver (AS), ein QoS Profil (QoSp), wobei das Qos profile (QoSp) durch die Netzwerkkontrollvorrichtung (NCD) als eine Funktion der aktuellen Netzwerkkapazitäten (Ncap) bestimmt wird und die Antworten in der mindestens einen Antwortdatenstruktur (Copa) gespeichert werden.

2. Verfahren nach Anspruch 1, wobei das Integrieren (30) der Applikation (App) in das drahtlose Kommunikationsnetzwerk (SYS) das Netzwerkkontrollvorrichtung (NCD) umfasst, welches das QoS Profil (QoSp) benutzt, um eine Sitzung für die Applikation (App) einzurichten.

3. Verfahren nach Anspruch 1, wobei das drahtlose Kommunikationssystem (SYS) ein 5G eigenständiges privates Netzwerk (SNPN) umfasst.

4. Verfahren nach Anspruch 1, wobei das Erhalten (10) der Gruppe von Netzwerkkapazitäten (Ncap) eine Abfrage eines digitalen Zwillings des drahtlosen Kommunikationssystems (SYS) umfasst.

5. Verfahren nach Anspruch 1, wobei das Erhalten (10) der Gruppe von Netzwerkkapazitäten (Ncap) umfasst:
- Übertragen zu einer Komponente des Netzwerks, von mindestens einer Anfrage, um mindestens ein Datenelement zu erhalten, welches den Wert eines Kapazitätsparameters der Komponente repräsentiert,
- Einfügen des mindestens einen Datenelements, welches den Wert des Kapazitätsparameters der Komponenten in einer Datenstruktur repräsentiert, welche die Gruppe von Netzwerkkapazitäten (Ncap) speichert.

6. Verfahren nach Anspruch 1, wobei das Anfragen (20) der Applikationsfunktionsschnittstelle (AFI) mindestens eine Wiederholung der folgenden Schritte umfasst:
- Auswählen aus der Gruppe von Netzwerkkapazitäten (Ncap) der mindestens einen vorgeschlagenen Untergruppe von Parameterwerten, welche von der Gruppe von Netzwerkkapazitäten extrahiert ist,
- Übermitteln der mindestens einen vorgeschlagenen Untergruppe von Parameterwerten an die Applikationsfunktionsschnittstelle (AFI),
- Erhalten, von der Applikationsfunktionsschnittstelle (AFI), mindestens eines Indikators, welcher die Fähigkeit der Applikation repräsentiert, mit der mindestens einen vorgeschlagenen Untergruppe von Parameterwerten implementiert zu werden,
- Speichern des mindestens einen Indikators mit der mindestens einen vorgeschlagenen Untergruppe von Parameterwerten.

7. Verfahren nach Anspruch 6, wobei das Erhalten des mindestens einen Indikators, welcher die Fähigkeit der Applikation (App) repräsentiert, mit der mindestens einen vorgeschlagenen Untergruppe von Parameterwerten implementiert zu werden, umfasst, dass die Applikationsfunktionsschnittstelle (AFI) einen digitalen Zwillings die Applikation (App) anwendung anfrägt.

8. Verfahren nach Anspruch 6, wobei der digitale Zwilling der Anwendung der Applikation mindestens ein Applikationsflussmodell in einem digitalen Zwilling des drahtlosen Kommunikationssystems (SYS) umfasst.

9. Verfahren nach Anspruch 6, wobei der digitale Zwilling der Applikationsanwendung mindestens ein Applikationsflussmodell in dem drahtlosen Kommunikationssystems (SYS) umfasst.

10. Verfahren nach einem der vorhergehenden Ansprüche, wobei die mindestens eine Antwort, welche die Fähigkeit der Applikation repräsentiert, mit mindestens einer vorgeschlagenen Untergruppe von Parameterwerten, welche von der Gruppe von Netzwerkkapazitäten (Ncap) extrahiert wird, zu arbeiten, Antworten umfasst, welche vom Applikationsserver (AS) bereitgestellt und/oder Applikationsklienten (AC) bereitgestellt werden.

11. Verfahren nach einem der vorhergehenden Ansprüche, wobei die mindestens eine Antwort, welche die Fähigkeit der Applikation repräsentiert, mit der mindestens einen vorgeschlagenen Untergruppe von Parameterwerten zu arbeiten, eine Bezeichnung umfasst, welche ein Verhalten von der Applikation (App) repräsentiert.

12. Verfahren nach Anspruch 11, wobei die Bezeichnung, welche ein Verhalten der Applikation (App) repräsentiert, eine Fehlerbehebung der Ende-zu-Ende Übertragung von mindestens einem Paket zwischen dem Applikationsklienten (AC) und dem Applikationsserver (AS) repräsentiert.

13. Verfahren nach Anspruch 1, wobei das Integrieren (30) der Applikation in das drahtlose Kommunikationssystem (SYS) umfasst:
- Erhalten der aktuellen Netzwerkkapazitäten (CNCap) von dem drahtlosen Kommunikationssystem,
- Auswählen, von der Antwortdatenstruktur (CoPa) und als eine Funktion der aktuellen Netzwerkkapazitäten (CNCap), mindestens eines Sitzungs-QoS-Profils welches für mindestens einen Datenfluss der Applikation in dem drahtlosen Kommunikationssystem (SYS) beeinflusst ist,
- Übermitteln an mindestens das drahtlose Kommunikationssystem (SYS), des mindestens einem Sitzungs-QoS-Profils, welches für mindestens einen Datenfluss der Applikation beeinflusst ist.
- Öffnen für die Applikation (App) in dem drahtlosen Kommunikationssystem, eine Kommunikationssitzung mit dem erhaltenen QoS Profil.

14. Eine Vorrichtung zum Konfigurieren einer Applikation (App), um in ein drahtloses Kommunikationssystem (SYS) zu integrieren, wobei die Applikation (App) einen Applikationsserver (AS) und einen Applikationsklienten (AC) umfasst, wobei die Vorrichtung Teil einer Netwerkkontrollvorrichtung (NCD) des drahtlosen Kommunkationssystems (SYS) ist, umfassend eine Applikationsfunktionsschnittstelle (AFI), wobei die Vorrichtung umfasst:
- ein Erfassungsmodul zum Erhalten, für das drahtlose Kommunikationssystem (SYS), mindestens eines Datenelements,
wobei jedes Datenelement einen Wert eines Fähigkeitsparameters des drahtlosen Kommunikationssystems (SYS) in der Form einer Gruppe von Netzwerkkapatzitäten (Ncap) repräsentiert,
- ein Anfragemodul, welches dafür konfiguriert ist, mit der Gruppe von Netzwerkkapazitäten (Ncap) die Applikationsschnittstelle (AFI) anzufragen, um mindestens eine Antwort bereitzustellen, welche die Fähigkeit repräsentiert, dass die Applikation (App) mit mindestens einer vorgeschlagenen Untergruppe von Parameterwerten arbeitet, welche von der Gruppe von Netzwerkkapazitäten (Ncap) extrahiert ist, wobei die mindestens eine Antwort der Applikation (App) in einer Antwortdatenstruktur (CoPa) gespeichert ist,
- ein Integrationsmodul, welches konfiguriert ist, zum Integrieren (30) der Applikation (App) in das drahtlose Kommunikationssystem (SYS) durch Zuweisung eines QoS Profils (QoSp) an den Applikationsserver (AS), wobei das QoS Profil (QoSp) als eine Funktion der Gruppe von Netzwerkkapazitäten (Ncap) bestimmt ist und die mindestens eine Antwort in der Antwortdatenstruktur (CoPa) gespeichert ist.

15. Computerprogrammprodukt, umfassend Anweisungen, welche, wenn sie von mindestens einem Prozessor ausgeführt werden, den mindestens einen Prozessor konfigurieren um ein Verfahren (1) nach einem der Ansprüche 1 bis 13 auszuführen.

## Revendications

1. Procédé de configuration d'une application (App) à intégrer dans un système de communication sans fil (SYS), l'application (App) comprenant un serveur d'application (AS) et un client d'application (AC), le procédé étant mis en œuvre par une interface système (SI) comprenant une interface de fonction d'application (AFI) et un dispositif contrôleur de réseau (NCD) du système de communication sans fil (SYS), le procédé comprenant :
- l'obtention (10), pour le système de communication sans fil (SYS), d'au moins une donnée, chaque donnée représentant une valeur d'un paramètre de capacité du système de communication sans fil (SYS), sous la forme d'un ensemble de capacités de réseau (NCap),
- avec l'ensemble de capacités de réseau (Ncap), la demande (20) à l'interface de fonction d'application (AFI) de fournir au moins une réponse représentant la capacité de l'application (App) à s'exécuter avec au moins un sous-ensemble proposé de valeurs de paramètres extraites de l'ensemble de capacités de réseau (Ncap), et le stockage de l'au moins une réponse dans une structure de données de réponse (CoPa),
- l'intégration (30) de l'application (App) dans le réseau de communication sans fil (SYS) en attribuant, au serveur d'application (AS), un profil de QoS (QoSp), le profil de QoS (QoSp) étant déterminé par le dispositif contrôleur de réseau (NCD) en fonction des capacités de réseau (Ncap) courantes et des réponses stockées dans l'au moins une structure de données de réponse (CoPa).

2. Procédé selon la revendication 1, dans lequel l'intégration (30) de l'application (App) dans le réseau de communication sans fil (SYS) comprend l'utilisation, par le dispositif contrôleur de réseau (NCD), du profil de QoS (QoSp) pour configurer une session pour l'application (App).

3. Procédé selon la revendication 1, dans lequel le système de communication sans fil (SYS) comprend un réseau privé autonome (SNPN) 5G.

4. Procédé selon la revendication 1, dans lequel l'obtention (10) de l'ensemble de capacités de réseau (Ncap) comprend l'interrogation d'un jumeau numérique dudit système de communication sans fil (SYS).

5. Procédé selon la revendication 1, dans lequel l'obtention (10) de l'ensemble de capacités de réseau (Ncap) comprend :
- la transmission, à un composant dudit réseau, d'au moins une requête d'obtention d'au moins une donnée représentant une valeur d'un paramètre de capacité du composant,
- l'insertion de l'au moins une donnée représentant la valeur du paramètre de capacité du composant dans une structure de données stockant l'ensemble de capacités de réseau (Ncap).

6. Procédé selon la revendication 1, dans lequel la demande (20) à l'interface de fonction d'application (AFI) comprend au moins une itération des étapes suivantes :
- la sélection, parmi l'ensemble de capacités de réseau (Ncap), de l'au moins un sous-ensemble proposé de valeurs de paramètres extraites de l'ensemble de capacités de réseau,
- la transmission de l'au moins un sous-ensemble proposé de valeurs de paramètres à l'interface de fonction d'application (AFI),
- la réception, en provenance de l'interface de fonction d'application (AFI), d'au moins un indicateur représentant la capacité de l'application à être mise en œuvre avec ledit au moins un sous-ensemble proposé de valeurs de paramètres,
- le stockage de l'au moins un indicateur avec l'au moins un sous-ensemble proposé de valeurs de paramètres.

7. Procédé selon la revendication 6, dans lequel la réception de l'au moins un indicateur représentant la capacité de l'application (App) à être mise en œuvre avec ledit au moins un sous-ensemble proposé de valeurs de paramètres comprend l'interrogation, par l'interface de fonction d'application (AFI), d'un jumeau numérique d'un déploiement de l'application (App).

8. Procédé selon la revendication 6, dans lequel le jumeau numérique du déploiement d'application comprend au moins un modèle de flux d'application dans un jumeau numérique du système de communication sans fil (SYS).

9. Procédé selon la revendication 6, dans lequel le jumeau numérique du déploiement d'application comprend au moins un modèle de flux d'application dans le système de communication sans fil (SYS).

10. Procédé selon l'une quelconque des revendications précédentes, dans lequel l'au moins une réponse représentant la capacité de l'application (App) à s'exécuter avec au moins un sous-ensemble proposé de valeurs de paramètres extraites de l'ensemble de capacités de réseau (Ncap) comprend des réponses fournies par le serveur d'application (AS) et/ou des réponses fournies par le client d'application (AC).

11. Procédé selon l'une quelconque des revendications précédentes, dans lequel l'au moins une réponse représentant la capacité de l'application (App) à s'exécuter avec l'au moins un sous-ensemble proposé de valeurs de paramètres comprend une étiquette représentant un comportement de l'application (App).

12. Procédé selon la revendication 11, dans lequel l'étiquette représentant un comportement de l'application (App) représente un dépannage de la transmission de bout en bout d'au moins un paquet entre le client d'application (AC) et le serveur d'application (AS).

13. Procédé selon la revendication 1, dans lequel l'intégration (30) de l'application (App) dans le système de communication sans fil (SYS) comprend :
- l'obtention des capacités de réseau courantes (CNCap) en provenance du système de communication sans fil,
- la sélection, à partir de la structure de données de réponse (CoPa) et en fonction des capacités de réseau courantes (CNCap), d'au moins un profil de QoS de session affecté à au moins un flux de données de l'application dans le système de communication sans fil (SYS),
- la transmission, au moins au système de communication sans fil (SYS), de l'au moins un profil de QoS de session affecté à l'au moins un flux de données de l'application,
- l'ouverture pour l'application (App), dans le système de communication sans fil, d'une session de communication avec le profil de QoS obtenu.

14. Dispositif de configuration d'une application (App) à intégrer dans un système de communication sans fil (SYS), l'application (App) comprenant un serveur d'application (AS) et un client d'application (AC), le dispositif faisant partie d'un dispositif contrôleur de réseau (NCD) du système de communication sans fil (SYS) comprenant une interface de fonction d'application (AFI), le dispositif comprenant :
- un module de collecte pour obtenir, pour le système de communication sans fil (SYS), au moins une donnée, chaque donnée représentant une valeur d'un paramètre de capacité du système de communication sans fil (SYS), sous la forme d'un ensemble de capacités de réseau (Ncap),
- un module de requête configuré pour, avec l'ensemble de capacités de réseau (Ncap), demander à l'interface de fonction d'application (AFI) de fournir au moins une réponse représentant la capacité de l'application (App) à s'exécuter avec au moins un sous-ensemble proposé de valeurs de paramètres extraites de l'ensemble de capacités de réseau (Ncap), l'au moins une réponse de l'application (App) étant stockée dans une structure de données de réponse (CoPa),
- un module d'intégration configuré pour intégrer (30) l'application (App) dans le système de communication sans fil (SYS) en attribuant, au serveur d'application (AS), un profil de QoS (QoSp), le profil de QoS (QoSp) étant déterminé en fonction de l'ensemble de capacités de réseau (Ncap) et de l'au moins une réponse stockée dans la structure de données de réponse (CoPa).

15. Produit-programme informatique comprenant des instructions qui, lorsqu'elles sont exécutées par au moins un processeur, configurent ledit au moins un processeur pour réaliser un procédé (1) selon l'une quelconque des revendications 1 à 13.
